# FASCICULE DE BREVET EUROPEEN

(11) **EP 0 398 775 B1**
(45) Date de publication et mention de la délivrance du brevet: **29.09.1993**
(21) Numéro de dépôt: 90401095.6
(22) Date de dépôt: 24.04.1990
(51) Int. Cl.: C08J 5/06

(54) **Produit d'ensimage de fibres de carbone pour matériau composite et procédé de fabrication de ce matériau**
Schlichtemittel für Kohlenstoffasern für Verbundmaterial und Verfahren zur Herstellung des Materials
Sizing agents for carbon fibres for composite material and process for preparing same

(30) Priorité: 27.04.1989 FR 8905598
(43) Date de publication de la demande: 22.11.1990
(73) Titulaire: AEROSPATIALE Société Nationale Industrielle, 75781 Paris Cédex 16 (FR)
(72) Inventeur: Beziers, Daniel, F-33160 St Medard en Jalles (FR); Boutevin, Bernard, F-34000 Montpellier (FR); Parisi, Jean-Piere, F-34090 Montpellier (FR); Thomas, Yannig, F-34000 Montpellier (FR); Chataignier, Evelyne, F-33700 Merignac (FR)
(74) Mandataire: Mongrédien, André

(56) Documents cités:
- EP-A- 0 256 852
- FR-A- 2 564 029
- US-A- 3 398 210

## Description

La présente invention a pour objet un produit d'ensimage de fibres de carbone destinées à être noyées dans une résine durcissable par rayonnement selon un mécanisme radicalaire, jouant le rôle d'une interface entre les fibres et la résine d'un matériau composite. Elle a aussi pour objet un procédé de fabrication d'un matériau composite comportant des fibres ensimées ainsi que le matériau obtenu.

Ces matériaux composites peuvent être simples ou complexes et sont en particulier utilisés dans le domaine de l'automobile, de l'aéronautique, du spatial, de la navigation, etc. ; dans le domaine de l'aéronautique et du spatial, ils sont plus spécialement utilisés pour la fabrication des propulseurs, des planchers et bord d'attaque des avions.

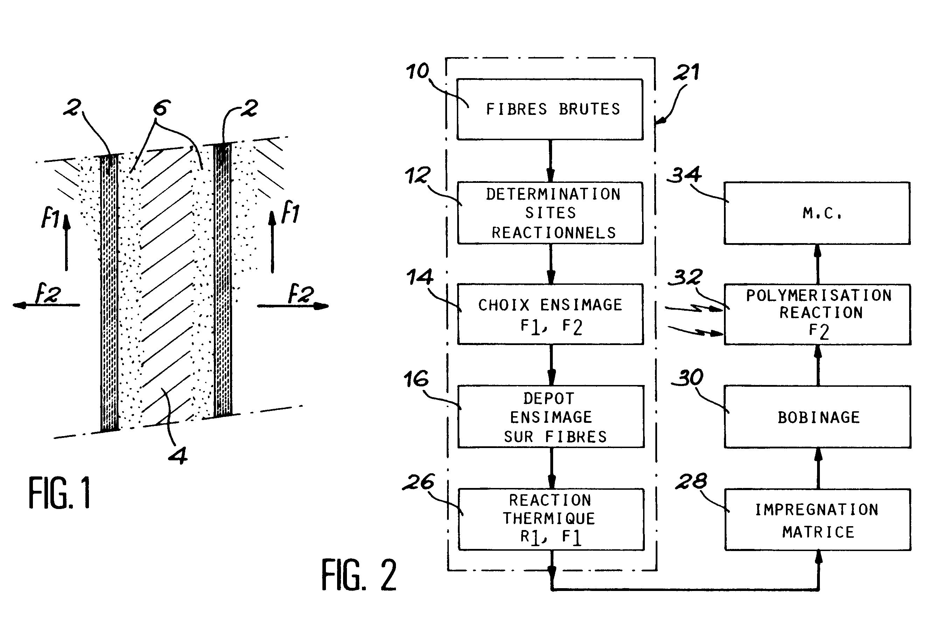

Sur la figure 1, on a représenté symboliquement un matériau composite à structure simple. Ce matériau composite comporte des fibres 2 en carbone, noyées dans une matrice 4 constituée par une résine polymérisée et/ou réticulée. Sur cette figure, on a aussi représenté les interfaces 6 entre les fibres 2 et la matrice 4.

Dans un tel matériau composite, on a deux types de sollicitations mécaniques, l'une longitudinale, correspondant au sens des fibres, représentée par les flèches f1 et l'autre transverse, perpendiculaire aux fibres, représentée par les flèches f2. On entend par sollicitations transverses des sollicitations du type cisaillement et/ou de compression.

Ces sollicitations se répercutent au niveau des interfaces fibres-matrice 6, et dans le cas où celles-ci constituent le point faible du matériau composite, les performances mécaniques obtenues sont inférieures à celles de la matrice. Aussi, lorsque ces matériaux composites sont soumis à des efforts de cisaillement, on observe généralement un délaminage entre les fibres et la matrice pouvant provoquer la rupture du matériau.

Il en est de même pour les matériaux composites à structure complexe qui se différentient essentiellement par la présence d'objets ou inserts métalliques.

Pour remédier à ces inconvénients, un certain nombre de produits d'interface déposés sur la fibre de carbone, appelés ensimage ont été envisagés pour faciliter les conditions d'imprégnation des fibres par la résine lors de la fabrication du matériau composite et créer un "accrochage" entre la matrice et les fibres.

Les matériaux d'ensimage connus sont généralement des polymères ou copolymères complexes conduisant à des procédés d'ensimage souvent longs et fastidieux. Des matériaux d'ensimage polymériques sont en particulier décrits dans les documents FR-A-2 129 905, FR-A-2 129 906, FR-A-2 558 842 et FR-A-2 483 395.

De façon plus précise, l'invention a pour objet un produit d'ensimage de fibres de carbone destinées à être noyées dans une résine durcissable, selon un mécanisme radicalaire, par un rayonnement n'entraînant pas d'élévation de température du matériau tel que les rayonnements X ou bêta. En effet, les matériaux composites réalisés à partir de résines polymérisées et/ou réticulées par rayon ionisant à froid, selon un mécanisme radicalaire, ont des performances mécaniques sous certaines sollicitations et des tenues en température égales ou supérieures à celles polymérisées par voie thermique. La fabrication de matériaux composites haute performance à structure simple ou complexe en utilisant des rayonnements X ou bêta a notamment été décrite dans le document FR-A-2 564 029. Or, les matériaux d'ensimage actuellement connus ne sont pas compatibles avec un procédé de durcissement de résine par rayons ionisants, selon un mécanisme radicalaire, et ils conduisent alors à des liaisons d'interface encore insuffisantes dans le cas de sollicitations transverses importantes.

En effet, les matériaux composites haute performance ou structuraux (propriétés mécaniques) les plus utilisés sont obtenus par polymérisation et/ou réticulation par voie thermique en présence ou non d'un durcisseur. Voir à cet effet les documents cités précédemment.

Les résines utilisées sont alors des résines époxy ou polyesters et les fibres, des fibres de verre aramide ou carbone dont la préparation de surface ou matériau d'ensimage est compatible avec le procédé thermique utilisé pour le durcissement de ces résines.

A cet effet, on peut citer le document US-A-3 398 210 relatif à l'ensimage de fibres de verre destinées à être noyées dans une résine polyester à insaturations éthyléniques, durcissable thermiquement ou par irradiation ; l'accrochage du produit d'ensimage sur les fibres est assuré par des liaisons physiques du type liaison hydrogène entre les groupements silanols Si-OH des fibres et ceux des produits d'ensimage qui sont des produits obtenus par hydrolyse de dérivés silane.

On peut citer aussi le document WO-A-85/04200 relatif à la préparation de fibres cellulosiques destinées à être noyées dans une résine insaturée ou non, durcissable thermiquement. L'enduction des fibres par cette préparation est suivie d'un traitement alcalin à chaud. Cette mise en oeuvre est longue, fastidieuse et relativement complexe.

On peut encore citer le document EP-A-256 852 relatif à l'ensimage de fibres de carbone par un composé diméthacrylate-uréthanne, destinées à être noyées dans une résine insaturée, durcissable thermiquement.

L'accrochage du produit d'ensimage sur les fibres est assuré uniquement par des liaisons physiques, les fonctions uréthanne polaires ayant des affinités avec les sites réactionnels des fibres.

Aussi, l'invention vise à obtenir l'amélioration des caractéristiques en sollicitations transverses d'un matériau composite à fibres de carbone dont la matrice est obtenue par polymérisation d'une résine sous rayonnement, selon un mécanisme radicalaire, de manière à avoir des performances identiques au matériau composite polymérisé thermiquement, en tenue en compression et en cisaillement. L'amélioration de ces caractéristiques passe par l'aménagement d'un produit d'ensimage spécifique, sensible aux rayonnements.

En outre, la mise en oeuvre de l'ensimage doit être relativement simple et être utilisable industriellement.

De façon plus précise, l'invention a pour objet un produit d'ensimage réactif de fibres de carbone comportant des sites réactionnels OH, destinées à être noyées dans une résine durcissable par un rayonnement selon un mécanisme radicalaire, constitué par un monomère comportant au moins un premier groupement fonctionnel apte à former thermiquement des liaisons chimiques covalentes avec ces sites réactionnels et au moins un second groupement fonctionnel différent du premier groupement et apte à former des liaisons chimiques covalentes avec ladite résine lors de son durcissement sous ledit rayonnement, le premier groupement étant choisi parmi les groupements isocyanate, anhydride d'acide carboxylique, méthylol et chlorure d'acide carboxylique.

On entend par ensimage, l'opération qui consiste à enduire des fibres vierges, n'ayant subi aucun traitement de surface avec une faible quantité de matière calibrée avec précision. En général, la quantité de matière utilisée représente de 0,3 à 1,5% en poids des fibres et de préférence de 0,3 à 0,9% en poids.

Le produit d'ensimage bifonctionnel de l'invention permet premièrement d'assurer une "bobinabilité" des fibres au moment de l'imprégnation par la résine et deuxièmement, d'assurer une bonne qualité d'interface entre la fibre et la matrice (pour avoir une bonne tenue aux sollicitations transverses). On entend par "bobinabilité" le fait que la fibre garde sa forme et ne se défibre pas.

Le premier groupement fonctionnel F₁ du produit d'ensimage de l'invention assure une liaison chimique covalente entre les sites réactionnels chimiques des fibres et le produit d'ensimage.

Les sites réactionnels des fibres dépendent de la nature des fibres ainsi que des traitements notamment thermiques faits sur celles-ci pendant leur élaboration. En effet, les sites réactionnels des fibres de carbone actuellement connus sont OH, CO₂H, 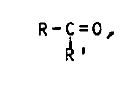
avec R et R'=H ou groupement alkyle, aryle ou phényle.

L'invention concerne uniquement les fibres de carbone comportant comme sites réactionnels prépondérants des sites OH.

Les premiers groupements fonctionnels du matériau d'ensimage, conformes à l'invention, ont l'avantage de former thermiquement des liaisons chimiques avec les sites OH, à des températures ne déclenchant pas la réaction chimique d'homopolymérisation du second groupement du produit d'ensimage.

Le choix des sites réactionnels présents en plus grande quantité sur les fibres va dans le sens de l'amélioration de l'accrochage de la matrice en résine sur les fibres.

Les groupements fonctionnels du type anhydride d'acide carboxylique, peuvent provenir d'un acide mono-, di-ou tricarboxylique.

De préférence, on utilise la fonction isocyanate pour le premier groupement. Dans ces conditions, la liaison chimique covalente établie avec les sites OH des fibres est une liaison uréthanne.

Le deuxième groupement fonctionnel F₂ du produit d'ensimage de l'invention favorise la liaison entre ce produit d'interface et la résine de la matrice du matériau composite. Cette liaison est une liaison chimique covalente et est assurée lors de la réticulation et/ou polymérisation à froid de la résine du matériau composite sous rayonnement, selon un mécanisme radicalaire. En particulier, le second groupement fonctionnel doit être apte à copolymériser, selon un mécanisme radicalaire, avec la résine de la matrice, lors de son durcissement, sous rayonnement bêta ou X. Aussi, ce second groupement fonctionnel doit être de même nature que celui constituant la résine du matériau composite.

Pour l'obtention de matériaux composites haute performance, on utilise de préférence des résines à insaturations éthyléniques telles que des résines époxy, polyester ou polyuréthanne à terminaisons (métha)acryliques ou des mélanges de ces résines. (Notons que les résines époxy à insaturations éthyléniques sont des résines d'origine époxy ne comportant plus de fonction époxy). Aussi, le groupement F₂ du produit d'ensimage de l'invention est choisi avantageusement du type à insaturations éthyléniques.

Toutefois, il est possible d'utiliser des groupements F₂ du type maléimide pour des résines du type bismaléimide.

En particulier, ce second groupement F₂ présente la formule (I) 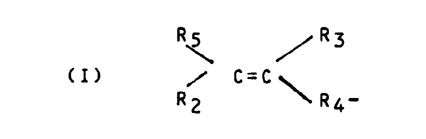
dans laquelle R₅ représente un atome d'hydrogène, un noyau benzénique, 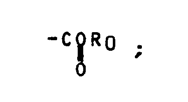
R₂ représente un atome d'hydrogène ou 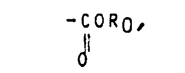
avec R₀ représentant un radical alkyle ou aryle linéaire ou ramifié ayant de 1 à 12 atomes de carbone ; R₃ représente un atome d'hydrogène ou le radical méthyle et R₄ représente un radical aryle,

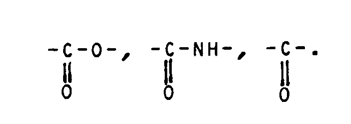

Les groupements aryle sont en particulier du type phényle, naphtyle, etc.

Le matériau d'ensimage selon l'invention a pour but d'améliorer l'adhérence des fibres de carbone à la matrice en résine d'un matériau composite. Aussi, l'invention a aussi pour objet un matériau composite comportant des fibres de carbone noyées dans une résine durcie par un rayonnement bêta ou X, selon un mécanisme radicalaire, comportant un produit d'ensimage réactif des fibres tel que défini précédemment.

Par ailleurs, l'invention a aussi pour objet un procédé de fabrication de ce matériau composite.

Selon une caractéristique essentielle de ce procédé, celui-ci comprend les étapes suivantes :
a) dissoudre le produit d'ensimage défini ci-dessus dans un solvant organique,
b) déposer sur les fibres la solution obtenue en a),
c) chauffer les fibres obtenues en b) pour évaporer le solvant et amorcer uniquement la réaction chimique entre le premier groupement et les sites réactionnels des fibres,
d) imprégner les fibres obtenues en c) d'une résine durcissable par rayonnement selon un mécanisme radicalaire,
e) soumettre les fibres imprégnées de résine audit rayonnement pour copolymériser le produit d'ensimage avec la résine via le second groupement et durcir ladite résine.

Les fonctions F₂ compatibles avec les matrices durcissables par rayonnement sont généralement sensibles à la température. Aussi, l'étape c) du procédé doit être effectuée à une température ne permettant pas l'homopolymérisation du produit d'ensimage, via le second groupement fonctionnel. Aussi, est-il préférable d'utiliser comme solvant organique des solvants ayant une faible tension de vapeur Pv et une faible température d'ébullition Te. En particulier, le solvant organique doit présenter une température d'ébullition inférieure à 100°C et une tension de vapeur supérieure à 95mb (9,5kPa) à 20°C.

A titre d'exemple, on utilise comme solvant du dichlorométhane (Pv=45,3kPa, Te=40°C), du chloroforme (Pv=21kPa, Te=60°C), du tétrahydrofuranne (Pv=20kPa, Te=66°C), de l'acétone (Pv=23,3kPa, Te=56,5°C), du dichloroéthane (Pv=24kPa, Te=83°C), du méthyléthylcétone (MEC) (Pv=10,5kPa, Te=79,6°C) ou de l'acétate d'éthyle (Pv=9,5kPa, Te=77°C).

De plus la température, notée T₁, utilisée au cours de l'étape c) dépend de la réaction, notée R₁, entre les sites réactionnels OH des fibres et le groupement fonctionnel F₁ (et donc de la fonction F₁) ainsi que de la réaction entre les groupements fonctionnels F₂ du produit d'ensimage.

Par exemple pour une fonction F₁ du type isocyanate et une fonction F₂ du type (métha)acrylate (CH₂=CY-CO₂- avec Y=H ou CH₃), on utilise une température de réaction T₁ de 60°C environ étant donné que la fonction (métha)acrylate est très sensible à la température. Dans ces conditions de température, la durée de l'étape c) devra être suffisamment longue pour assurer un taux de réaction R₁ suffisamment élevé.

En remplaçant uniquement la fonction F₂ (métha)acrylate par une fonction cinnamate (Ph-CH=CH-CO₂-), maléate ou fumarate 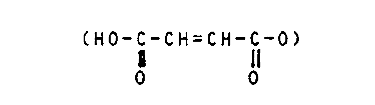
ou encore styrénique (CH₂=CH-Ph-), avec Ph représentant le radical phényle, on peut augmenter la température T₁ jusqu'à environ 110°C. Dans ces conditions, à la fin de l'étape c), le taux de réaction R₁ est plus élevé que dans le cas de la fonction (métha)acrylate à la sortie de la chaîne d'imprégnation par la résine.

Les autres types de fonctions F₁ que l'on peut utiliser tout en gardant la fonction F₂ (métha)acrylate sont l'anhydride d'acide carboxylique, le chlorure d'acide, le N-méthylol.

De même, on peut combiner ces nouvelles fonctions F₁ en remplaçant la fonction F₂ métha(acrylate) par une fonction cinnamate, maléate, fumarate ou styrénique. Dans ce cas, la température de réaction T₁ peut alors être choisie entre 60 et 110°C.

Comme produit d'ensimage comportant comme fonction F₁ un anhydride d'acide et comme fonction F₂ une insaturation éthylénique, on peut citer l'anhydride maléïque de formule

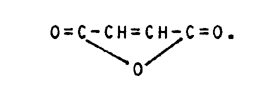

Comme produit d'ensimage comportant comme fonction F₁ un chlorure d'acide et comme fonction F₂ une insaturation éthylénique, on peut citer le chlorure de cynnamoyle de formule :

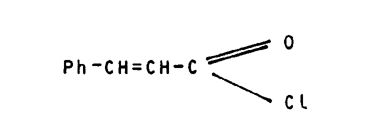

Comme produit d'ensimage comportant comme fonction F₁ un N méthylol et comme fonction F₂ une insaturation éthylénique, on peut citer le N-méthylolacrylamide de formule

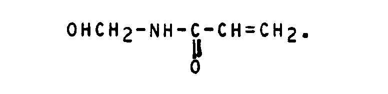

Afin de favoriser et/ou d'accélérer encore la réaction chimique R₁ entre les sites réactionnels des fibres et le premier groupement fonctionnel, on peut ajouter à la solution contenant le produit d'ensimage, un catalyseur ou un mélange de catalyseurs.

On peut aussi ajouter à la solution contenant le produit d'ensimage un inhibiteur de la réaction d'homopolymérisation entre les fonctions F₂ du produit d'ensimage.

Lorsque le premier groupement fonctionnel est le groupement isocyanate, on utilise comme catalyseur du DBTDL (dibutylétaindilaurate) associé éventuellement à du DABCO (1-4-diazabicyclo(2,2,2)octane.

Le produit d'ensimage de l'invention présente par exemple la formule (II) suivante : 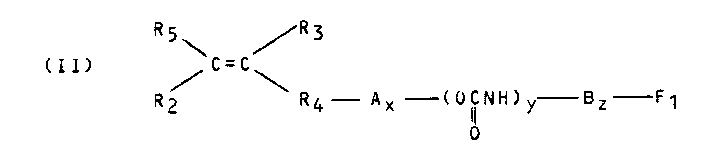
avec x, y, z représentant 0 ou 1 ; F₁ représentant -N=C=O, -Cl, -CH₂OH, 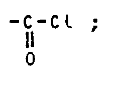
R₅, R₂, R₃ et R₄ ayant la même signification que précédemment ; A représentant un radical alkyle linéaire ou ramifié ayant de 1 à 12 atomes de carbone ; B représentant un radical alkyle linéaire ou ramifié de 1 à 6 atomes de carbone ou un radical aryle du type :

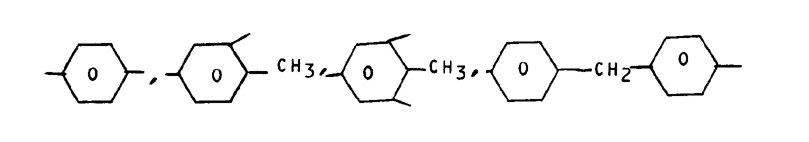

D'autres caractéristiques et avantages de l'invention ressortiront mieux de la description qui va suivre, donnée à titre illustratif et non limitatif, en référence aux figures 2 à 4 annexées, la figure 1 ayant déjà été décrite.

Les figures 2 et 4 sont des schémas blocs illustrant le procédé de fabrication d'un matériau composite à partir de fibres de carbone ensimées avec le produit d'ensimage conforme à l'invention.

La figure 3 représente schématiquement l'ensimage d'une fibre de carbone avec le produit d'ensimage conforme à l'invention.

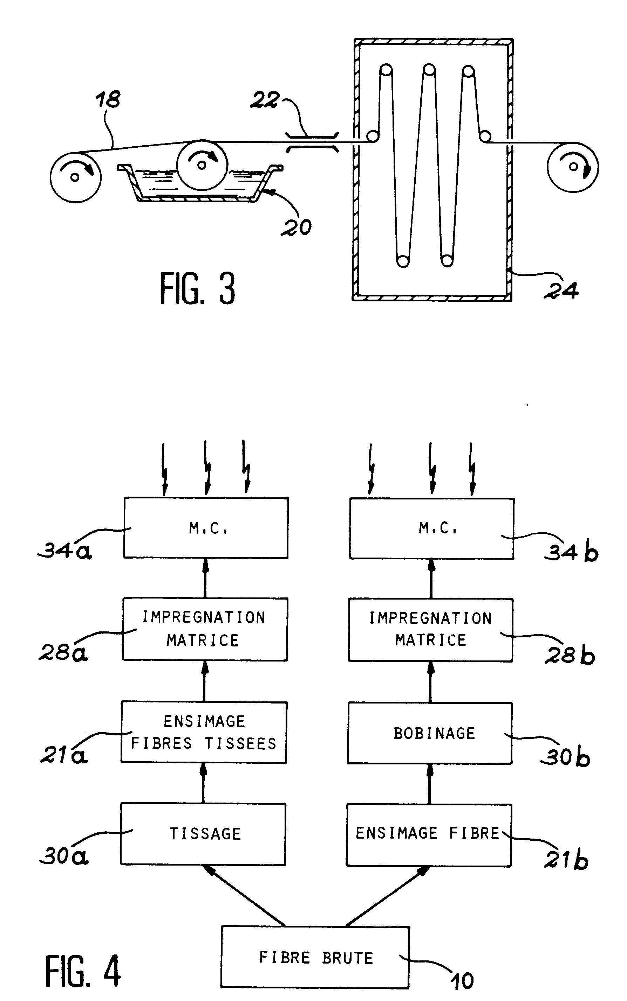

En référence aux figures 2 et 3, on décrit ci-après la fabrication d'une pièce en matériau composite comportant des fibres ensimées conformément à l'invention, noyées dans une matrice durcie par rayonnement. Cet ensimage est effectué sur des fibres de carbone, brutes n'ayant subi encore aucun traitement de surface. L'utilisation de fibres brutes est symbolisée par le bloc 10 de la figure 2.

Dans un premier temps, on étudie l'état de surface de ces fibres brutes par spectroscopie électronique ESCA bien connue de l'homme de l'art. Cette étape est représentée par le bloc 12 sur la figure 2. Elle permet la détermination des sites réactionnels des fibres. En vue d'un accrochage optimal du produit d'ensimage, on choisit des sites réactionnels statistiquement les plus nombreux. Dans le cas de fibres de carbone du type à module intermédiaire, on trouve que les sites réactionnels prépondérants sont les groupements hydroxyle.

On détermine alors le choix du produit d'ensimage. Ce choix est symbolisé par le bloc 14 de la figure 2. Le produit d'ensimage choisi est bien entendu fonction des sites réactionnels déterminés par la méthode ESCA mais aussi du type de résine utilisée pour constituer la matrice du matériau composite. Les produits d'ensimage sont ceux donnés précédemment.

Le produit d'ensimage choisi est alors dissous dans un solvant organique à faible tension de vapeur dans des proportions permettant un taux d'ensimage de 0,3 à 2%. Le solvant est nécessaire pour favoriser la répartition et l'imprégnation des fibres par le produit d'ensimage compte tenu du faible pourcentage final du taux d'ensimage visé.

Afin d'optimiser la réaction R₁ entre les sites réactionnels des fibres et la fonction F₁ du produit d'ensimage, on peut ajouter dans la solution d'ensimage un ou plusieurs catalyseurs de la réaction R₁ ainsi qu'un inhibiteur de la réaction d'homopolymérisation entre les fonctions F₂ du produit d'ensimage.

L'étape suivante du procédé, représentée par le bloc 16 sur la figure 2, consiste à déposer la solution d'ensimage obtenue sur les fibres brutes. Ce dépôt se fait, comme représenté sur la figure 3, en faisant passer à vitesse constante chaque fibre à ensimer 18 dans un bac 20 contenant la solution d'ensimage. Après passage dans une filière 22, la fibre ensimée 18 pénètre dans une étuve 24 portée à la température T₁ maximale autorisée pour la fonction F₂.

Le passage de chaque fibre dans l'étuve 24 permet l'évaporation du solvant de la solution d'ensimage ainsi que l'amorçage de la réaction chimique R₁ entre la fonction F₁ du produit d'ensimage et les sites réactionnels de la fibre. Cette étape est représentée par le bloc 26 sur la figure 2.

La température T₁ est choisie de façon à favoriser la réaction R₁ sans toutefois faire réagir, par homopolymérisation, la fonction F₂ du produit d'ensimage, prévue pour l'accrochage sur la résine de la matrice.

La filière 22 permet d'affiner le pourcentage de produit d'ensimage sur les fibres 18 et de parfaire l'imprégnation à coeur des fibres par le produit d'ensimage.

Le temps d'étuvage de chaque fibre imprégnée dépend de la température maximale T₁ autorisée par la fonction F₂, de la vitesse de défilement de la fibre et de la longueur de l'étuve 24. Par exemple, la vitesse de défilement est de 24 m/min et la longueur de passage dans une étuve est de 6 m.

Le processus d'ensimage 21 des fibres est alors terminé. Les fibres 18 ainsi ensimées peuvent être stockées plusieurs jours jusqu'à la fabrication d'une pièce déterminée en matériau composite.

Les fibres ensimées sont alors imprégnées dans un bac d'imprégnation par une résine liquide du type uréthane-acrylique, époxy-acrylique, polyester-acrylique ou une formulation obtenue en mélangeant ces différentes résines. Cette étape d'imprégnation est effectuée de façon connue et est symbolisée par le bloc 28 sur la figure 2.

Les fibres ensimées, et imprégnées de résine sont ensuite déposées sur un support (type mandrin) représentatif de la forme de la pièce en matériau composite à réaliser, suivant des trajectoires de bobinage préalablement calculées. Ce bobinage est effectué sur plusieurs couches de façon à obtenir les meilleures performances mécaniques. Cette étape de bobinage constitue l'étape de fabrication du substrat fibreux du matériau composite et est symbolisée par le bloc 30 de la figure 2.

A la place d'un bobinage des fibres, il est aussi possible de réaliser un tissage selon deux ou trois directions.

La dernière étape du procédé, symbolisée par le bloc 32 de la figure 2, consiste à polymériser et/ou réticuler la résine de la matrice et à faire réagir la fonction F₂ avec la résine de la matrice en soumettant le substrat à un rayonnement ionisant X ou bêta.

Les conditions d'irradiation d'une pièce en matériau composite dépendent de sa forme ainsi que de la nature de la résine constituant la matrice. Ces conditions sont en particulier celles données dans le brevet FR-A-2 564 029.

Dans le cas d'une pièce cylindrique, la pièce est exposée sous l'accélérateur de rayons X ou d'électrons en défilement et en rotation de façon que toutes les parties susceptibles d'être modifiées par le rayonnement reçoivent la dose minimale nécessaire à cette modification. Ces modifications de structure sont bien entendu la copolymérisation du produit d'ensimage avec la résine de la matrice ainsi que le durcissement de cette résine. Par ailleurs, les pièces en matériau composite notamment du type propulseur d'avions, comportent des parties adhésives servant à assurer diverses liaisons qui doivent aussi être durcies par rayonnement. L'adhésif est en général à base de résine époxy-acrylique.

Pour une pièce en matériau composite réalisée avec des fibres de carbone ensimées avec un produit d'ensimage dont la fonction F₂ est une insaturation éthylénique et imprégnées de résine époxy à terminaison acrylique, on utilise une dose d'irradiation de 50kGy pour la polymérisation de la résine de la matrice et la copolymérisation de la fonction F₂ avec la résine de la matrice.

Cette irradiation est assurée avec des rayons X ou des électrons suivant l'épaisseur de la pièce concernée.

Dans le cas d'une résine de la matrice très réactive qui nécessite de faibles doses d'irradiation, par exemple environ 10kGy, il faut choisir comme dose minimale la dose nécessaire à assurer la réaction F2 si cette dose est supérieure à celle nécessaire au durcissement de la matrice.

La pièce en matériau composite (M. C.), symbolisée par le bloc 34 de la figure 2 est alors terminée.

Pour la fabrication d'une pièce en matériau composite, il est possible d'intervertir les étapes d'ensimage, de fabrication du substrat et d'imprégnation du substrat fibreux par la résine. Ceci est représenté sur la figure 4.

En particulier, il est possible d'effectuer un tissage 30a des fibres brutes 10 (partie gauche de la figure 4), avant de les ensimer. L'ensimage représenté par le bloc 21a est réalisé comme précédemment.

Les fibres ensimées sont alors imprégnées par la résine liquide de la matrice, étape représentée par le bloc 28a. La fabrication du matériau composite 34a se poursuit par l'irradiation du substrat ensimé et imprégné.

Il est aussi possible d'effectuer l'ensimage des fibres, représenté par le bloc 21b sur la partie droite de la figure 4, juste avant la réalisation du substrat fibreux par tissage ou bobinage, étape représentée par le bloc 30b. Le substrat ensimé peut alors être imprégné par la résine liquide de la matrice, comme schématisé par le bloc 28b puis irradié afin d'obtenir le produit final en matériau composite 34b.

On donne ci-après différents exemples de produits d'ensimage conformes à l'invention.

### Exemple 1

Cet exemple est relatif à un produit d'ensimage de fibres de carbone comportant des sites hydroxyles, destinées à être noyées dans une résine époxy, polyester ou polyuréthane à terminaisons (métha)acryliques. Le premier groupement fonctionnel est un groupement isocyanate et le second groupement fonctionnel un méthacrylate.

Les formules des composés utilisés pour l'élaboration de ce produit d'ensimage ainsi que le schéma réactionnel sont donnés en annexe I.

### Conditions opératoires

On ajoute goutte à goutte 144 g (1 mole) de 2-hydroxypropylméthacrylate (III) à une solution contenant 174 g d'un mélange de 2,4 et 2,6 toluylène diisocyanate (80/20) (IV), et 0,3 g de dibutylétaindilaurate (DBTDL) (catalyseur de la réaction alcool-isocyanate) dans 300 g de toluène anhydre, à une température de 60°C et sous un bullage d'azote sec.

De façon à éviter la polymérisation de la double liaison, on rajoute 100 ppm d'hydroquinone et on maintient l'agitation et la température à 60°C pendant 5 heures. On évapore ensuite le solvant au rotavapor sous 2,7kPa (20 mmHg) à température ambiante (20°C) puis à la pompe à palettes sous 67,5Pa (0,5 mmHg) pendant quelques minutes pour éliminer toute trace du solvant. On obtient le composé (V) majoritairement (90%) avec 10% de composé diméthacrylate obtenu par réaction de 2 moles de (III) avec (IV).

On a accès au pourcentage des fonctions isocyanates selon la méthode traditionnelle de dosage des fonctions NCO par la dibutylamine. On obtient 12,8% au lieu de 13,4% calculé théoriquement.

### Mise en oeuvre de l'ensimage

Afin d'obtenir un taux d'ensimage voisin de 0,5% sur la fibre de carbone, on prépare une solution d'ensimage avec 0,75 g du mélange obtenu précédemment contenant l'isocyanate insaturé (V) dans 100 g de dichlorométhane dans laquelle on rajoute un mélange de catalyseurs dans les proportions suivantes :
0,15 g (DBTDL) dibutylétaindilaurate + 0,22 g (DABCO) 1-4 diazabicyclo(2,2,2)octane pour une mole d'isocyanate (IV).

### Exemple 2

Cet exemple se distingue de l'exemple 1 par le choix des produits de départ comportant respectivement la fonction isocyanate et la fonction méthacrylate. Les formules des différents composés utilisés pour l'élaboration de ce produit sont données dans l'annexe II.

### Conditions opératoires

On ajoute goutte à goutte 144 g (1 mole) de 2 hydroxypropylméthacrylate (VI) à une solution contenant 168,2 g (1 mole) d'hexaméthylène diisocyanate (VII) et 0,3 g de DBTDL ainsi que 100 ppm d'hydroquinone (inhibiteur de polymérisation) dans 300 g d'acétate d'éthyle, à une température de 60°C. On maintient ensuite l'agitation et la température à 40°C pendant 5 heures. On évapore le solvant au rotavapor sous 2,7kPa (20 mmHg) à température ambiante (20°C). On obtient le composé (VIII) en mélange avec le composé (IX). Le dosage des fonctions isocyanates nous donne 12,97%, le pourcentage théorique étant de 13,46%.

La mise en oeuvre du produit d'ensimage obtenue est la même que dans l'exemple 1.

### Exemple 3

Dans cet exemple le premier groupement est encore un groupement isocyanate et le second groupement un groupement maléate. Les produits utilisés pour la fabrication de ce produit d'ensimage ainsi que le schéma réactionnel sont donnés en annexe III.

Première étape : on fait réagir 60 g (1 mole) d'isopropanol (XI) avec 98 g (1 mole) d'anhydride maléique (X) à 100°C pendant 2 heures et on obtient le composé (XII) quantitativement.

Deuxième étape : on mélange 100 g (1 mole) d'époxyhexane (XIII) avec 0,1% en poids (par rapport à l'ensemble des réactifs) de diisopropylsalicylate de chrome (CrDIPS) (catalyseur de la réaction acide-époxyde insaturé), que l'on ajoute à 158 g (1 mole) de (XII). La réaction s'effectue à 100°C pendant 3 heures. On obtient le composé (XIV) avec un rendement de 86%.

Troisième étape : on ajoute goutte à goutte 258 g (1 mole) de (XIV) dans une solution contenant 174 g (1 mole) de 2,4 toluylène diisocyanate (TDI) (XV) dans 2l d'hexane anhydre sous un courant d'azote sec à température ambiante et sous agitation. On arrête le bullage au bout de 7 heures, mais on laisse l'agitation pendant encore 17 heures, en ayant pris soin d'éviter toute entrée d'humidité dans le mélange réactionnel.

Le composé isocyanate-maléate (XVI) obtenu forme une huile assez visqueuse verte, insoluble dans l'hexane. On l'extrait donc par séparation des 2 phases et on le lave par de l'hexane afin d'éliminer le 2,4 TDI (XV) qui n'a pas réagi. L'hexane résiduel est filtré sur fritté. Le composé (XVI) est récupéré par solubilisation dans le dichlorométhane. Finalement, on obtient le composé (XVI) avec un rendement de 93,5%. Le pourcentage de fonctions NCO est de 9,55% au lieu de 9,72% calculé théoriquement.

La mise en oeuvre de l'ensimage est identique à celle donnée dans l'exemple 1.

### Exemple 4

On a préparé une solution d'ensimage contenant 0,75 g de l'isocyanate insaturé (V) obtenu dans l'exemple 1 dans 100 g de dichlorométhane. A l'aide de cette solution, on a ensimé des fibres de carbone HERCULES IM6 dont les sites réactionnels majoritaires sont les groupements hydroxyle.

Cet ensimage a été effectué selon le schéma représenté sur la figure 3. L'évaporation du solvant et la réaction R₁ entre la fonction isocyanate et les sites OH ont été réalisées à 50°C ; ce traitement thermique a duré 15 secondes (vitesse de passsage : 24 m/min ; et la longueur de passage : 6 m).

Les fibres de carbone ensimées ont alors été imprégnées dans un mélange de résine liquide contenant une résine époxy-acrylate et une résine polyuréthane-acrylate.

On a alors effectué le bobinage d'un anneau N.O.L. (module de caractérisation) permettant de définir le cisaillement interlaminaire entre les fibres et la matrice. Cet anneau N.O.L. a ensuite été irradié avec des électrons à une dose de 50kGy. Pendant cette irradiation, le module de caractérisation était soumis à une rotation et à un défilement sous l'accélérateur d'électrons. La vitesse de défilement était de 0,12m/min pour un accélérateur d'électrons de 6,2MeV et 7,5kW.

La caractérisation en cisaillement interlaminaire a été effectuée en flexion selon trois points. On a obtenu une contrainte de cisaillement interlaminaire de l'ordre de 40MPa.

### Exemple 5

Cet exemple se différencie uniquement de l'exemple 4 par l'utilisation du produit d'ensimage (VIII) obtenu dans l'exemple 2. La composition de la solution d'ensimage est la même que celle de l'exemple 4.

La contrainte de cisaillement interlaminaire mesurée pour des fibres IM6 brutes ensimées par ce produit d'ensimage, noyées dans une matrice identique à celle de l'exemple 4, est comprise entre 45 et 50MPa.

### Contre exemple 1

Une fibre de carbone HERCULES IM6 pourvue d'un ensimage G (ce qui correspond à une fibre sous sa forme commerciale) a été imprégnée par un mélange de résine composé d'une résine époxy-acrylate et d'une résine polyuréthane-acrylate, identique à celui de l'exemple 4. Après la réalisation d'un anneau N.O.L. et d'une polymérisation de la résine dans les mêmes conditions que dans l'exemple 4, on a mesuré la contrainte de cisaillement interlaminaire de cet anneau N.O.L. La contrainte mesurée est comprise entre 20 et 30MPa et est donc inférieure à celle obtenue dans les exemples 4 et 5 conformes à l'invention.

### Contre exemple 2

Une fibre de carbone HERCULES IM6 dépourvue d'ensimage a été imprégnée par un mélange de résine époxy-acrylate et polyuréthane-acrylate comme dans l'exemple 4.

Après réalisation d'un anneau N.O.L. et de la polymérisation de cet anneau comme dans l'exemple 4, on a mesuré la contrainte de cisaillement interlaminaire de cet anneau. La valeur mesurée est voisine de 30MPa.

Il ressort clairement des exemples 4 et 5 et des contre exemples 1 et 2 que l'utilisation d'un produit d'ensimage conforme à l'invention améliore les caractéristiques en sollicitation transverse des matériaux composites.

Comme autres exemples de produits d'ensimage utilisables dans l'invention avec des fibres de carbone riches en groupement OH et une résine à terminaisons acryliques, on peut citer ceux donnés dans l'annexe IV.

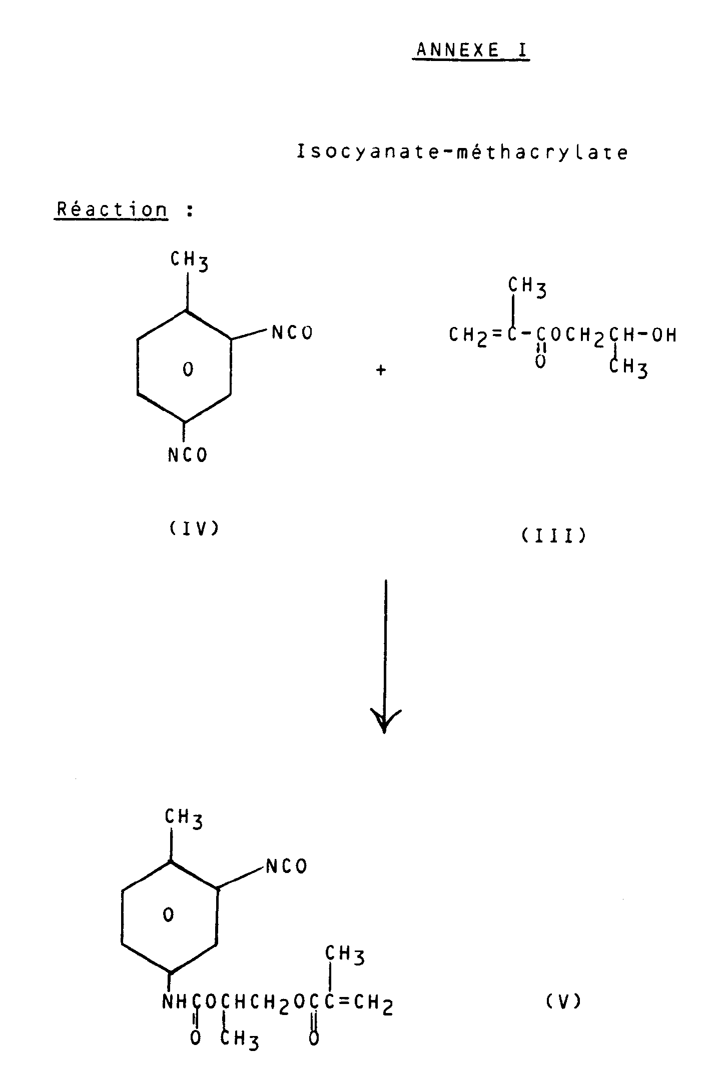

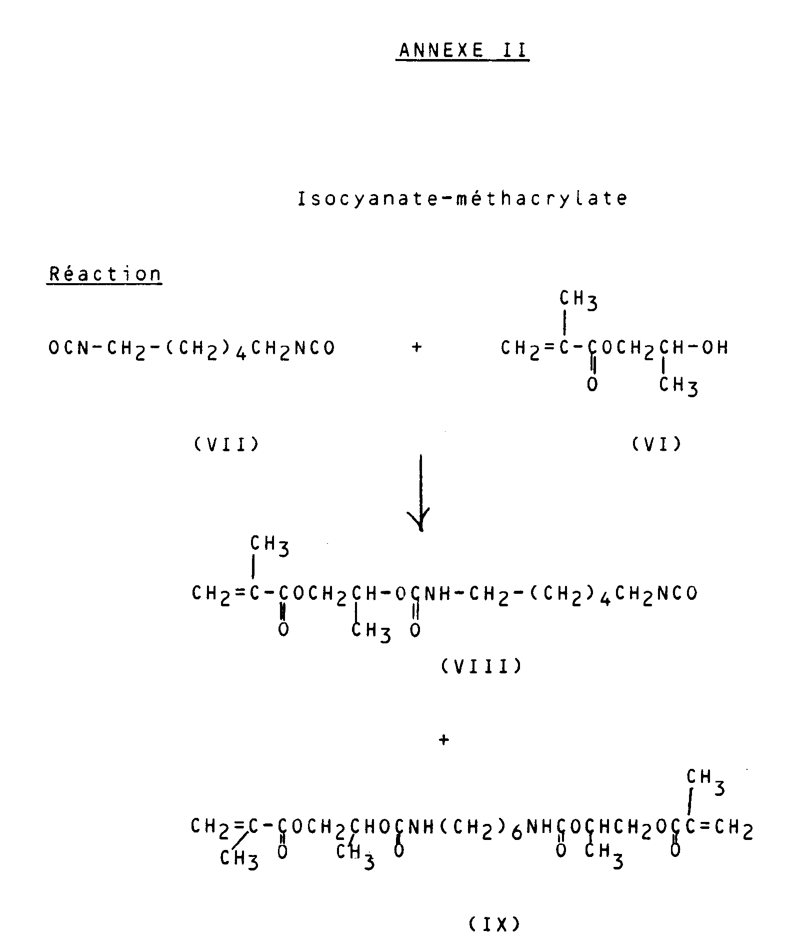

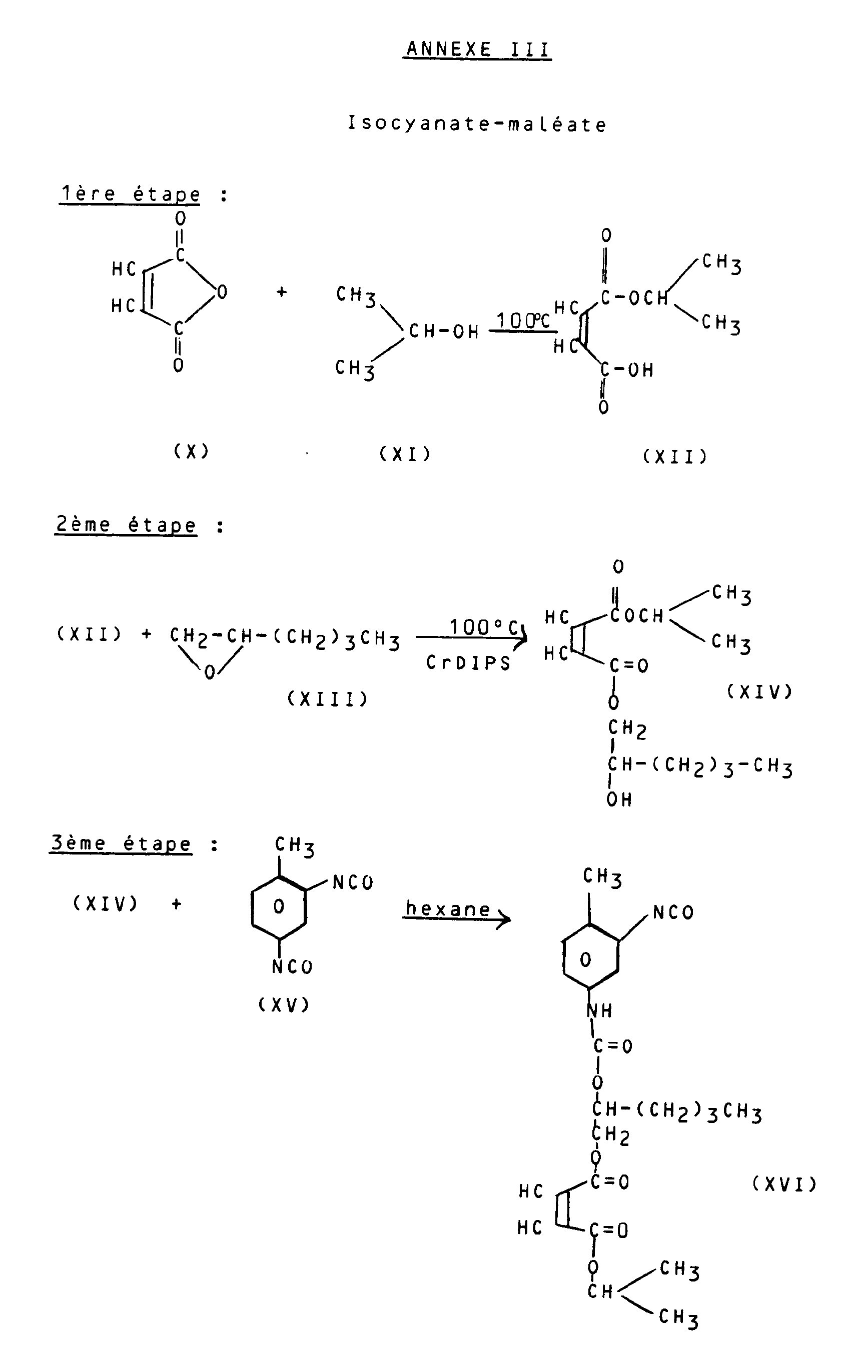

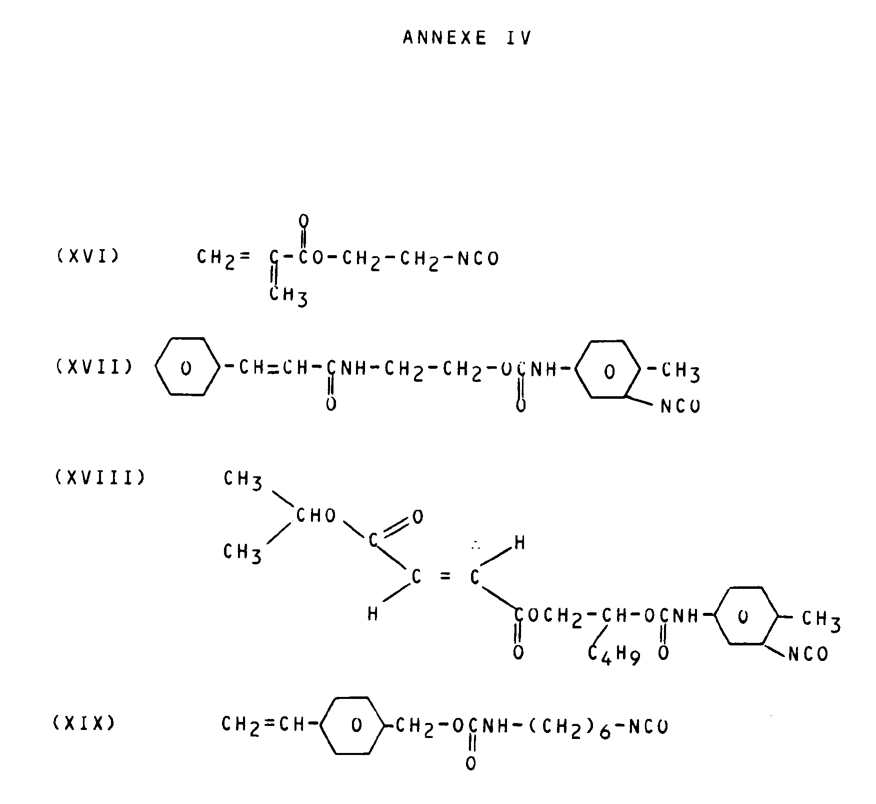

## Revendications

1. Produit d'ensimage réactif de fibres de carbone (2) comportant des sites réactionnels OH, destinées à être noyées dans une résine (4) durcissable par rayonnement selon un mécanisme radicalaire, constitué par un monomère comportant au moins un premier groupement fonctionnel (F₁) apte à former thermiquement des liaisons chimiques covalentes avec ces sites réactionnels et au moins un second groupement fonctionnel (F₂) différent du premier groupement et apte à former des liaisons chimiques covalentes avec ladite résine lors de son durcissement sous ledit rayonnement, le premier groupement étant choisi parmi les groupements isocyanate, anhydride d'acide carboxylique, méthylol et chlorure d'acide carboxylique.

2. Produit selon la revendication 1, caractérisé. en ce que le second groupement est une insaturation éthylénique.

3. Produit selon la revendication 1 ou 2, caractérisé en ce que le premier groupement est le groupement isocyanate.

4. Produit selon l'une quelconque des revendications 1 à 3, caractérisé en ce que le second groupement est choisi parmi les groupements cinnamate, maléate, fumarate, styrénique, acrylate, méthacrylate et maléimide.

5. Produit selon l'une quelconque des revendications précédentes, caractérisé en ce que le second groupement est du type méthacrylate ou maléate.

6. Matériau composite comportant des fibres de carbone noyées dans une résine durcie par rayonnement selon un mécanisme radicalaire, caractérisé en ce qu'il comprend un produit d'ensimage des fibres selon l'une quelconque des revendications 1 à 5, assurant l'adhérence de la résine aux fibres.

7. Procédé de fabrication d'un matériau composite comportant des fibres de carbone (2) noyées dans une résine (4), consistant à :
a) dissoudre le produit d'ensimage selon l'une quelconque des revendications 1 à 5 dans un solvant organique,
b) déposer (20) sur les fibres la solution obtenue en a),
c) chauffer (24) les fibres obtenues en b) pour évaporer le solvant et amorcer uniquement la réaction chimique entre le premier groupement et les sites réactionnels des fibres,
d) imprégner (28) les fibres obtenues en c) d'une résine durcissable par rayonnement selon un mécanisme radicalaire,
e) soumettre (32) les fibres imprégnées de résine audit rayonnement pour copolymériser le produit d'ensimage avec la résine via le second groupement et durcir ladite résine.

8. Procédé selon la revendication 7, caractérisé en ce que l'on introduit dans la solution obtenue en a) un catalyseur ou un mélange de catalyseurs pour favoriser la réaction chimique de l'étape c).

9. Procédé selon la revendication 7 ou 8, caractérisé en ce que la résine durcissable comporte une insaturation éthylénique.

10. Procédé selon l'une quelconque des revendications 7 à 9, caractérisé en ce que le rayonnement est un rayonnement X ou bêta.

## Patentansprüche

1. Reaktionsfähiges Schlichtemittel für OH-Reaktionszentren aufweisende Kohlenstoffasern (2), die bestimmt sind, mit einem durch Strahlung nach einem radikalischen Mechanismus härtbaren Harz (4) getränkt zu werden, bestehend aus einem Monomeren, das wenigstens eine erste funktionelle Gruppe (F₁), die geeignet ist, auf thermischem Wege mit diesen Reaktionszentren covalente chemische Bindungen zu bilden, und wenigstens eine zweite funktionelle Gruppe (F₂) aufweist, die von der ersten Gruppe verschieden und geeignet ist, unter Einwirkung der Strahlung mit dem Harz bei dessen Härtung covalente chemische Bindungen zu bilden, wobei die erste Gruppe unter den Isocyanat-, Carbonsäureanhydrid-, Methylol- und Carbonsäurechloridgruppen gewählt wird.

2. Produkt nach Anspruch 1, dadurch gekennzeichnet, daß die zweite Gruppe durch eine C-C-Doppelbindung ungesättigt ist.

3. Produkt nach Anspruch 1 oder 2, dadurch gekennzeichnet, daß die erste Gruppe die Isocyanatgruppe ist.

4. Produkt nach einem der Ansprüche 1 bis 3, dadurch gekennzeichnet, daß die zweite Gruppe unter den Cinnamat-, Maleat, Fumarat-, Styryl-, Acrylat-, Methacrylat- und Maleinimidgruppen gewählt wird.

5. Produkt nach einem der vorangehenden Ansprüche, dadurch gekennzeichnet, daß die zweite Gruppe eine solche vom Methacrylat- oder Maleat-Typ ist.

6. Verbundmaterial, das Kohlenstoffasern, die mit einem durch Strahlung nach einem radikalischen Mechanismus gehärteten Harz getränkt sind, umfaßt, dadurch gekennzeichnet, daß es ein Schlichtemittel für die Fasern nach einem der Ansprüche 1 bis 5 enthält, das die Haftung des Harzes an den Fasern sicherstellt.

7. Verfahren zur Herstellung eines Verbundmaterials, das Kohlenstoffasern (2), die mit einem Harz (4) getränkt sind, umfaßt, bestehend darin,
a) das Schlichtemittel nach einem der Ansprüche 1 bis 5 in einem organischen Lösungsmittel aufzulösen,
b) auf die Fasern die in a) enthaltene Lösung aufzubringen (20),
c) die in b) erhaltenen Fasern zu erwärmen (24), um das Lösungsmittel zu verdampfen und selektiv die chemische Reaktion zwischen der ersten Gruppe und den Reaktionszentren der Fasern einzuleiten,
d) die in c) erhaltenen Fasern mit einem durch Strahlung nach einem radikalischen Mechanismus härtbaren Harz zu tränken (28) und
e) die mit Harz getränkten Fasern genannter Strahlung auszusetzen (32), um über die zweite Gruppe das Schlichtemittel mit dem Harz zu copolymerisieren und das Harz zu härten.

8. Verfahren nach Anspruch 7, dadurch gekennzeichnet, daß man in die bei Schritt a) erhaltene Lösung einen Katalysator oder eine Mischung von Katalysatoren einführt, um die chemische Reaktion von Schritt c) zu begünstigen.

9. Verfahren nach Anspruch 7 oder 8, dadurch gekennzeichnet, daß das härtbare Harz durch eine C-C-Doppelbindung ungesättigt ist.

10. Verfahren nach einem der Ansprüche 7 bis 9, dadurch gekennzeichnet, daß es sich bei der Strahlung um Röntgen- oder β-Strahlung handelt.

## Claims

1. Product for the reactive lubrication of carbon fibres (2) having OH reaction sites for embedding in a resin (4) hardenable by radiation according to a radical mechanism, constituted by a monomer having at least one first functional group (F₁) able to thermally form covalent chemical bonds with the reaction sites and at least one second functional group (F₂) differing from the first group and able to form covalent chemical bonds with said resin during its hardening under said radiation, the first group being chosen from among isocyanate, carboxylic acid anhydride, methylol and carboxylic acid chloride groups.

2. Product according to claim 1, characterized in that the second group is an ethylene unsaturation.

3. Product according to claim 1 or 2, characterized in that the first group is the isocyanate group.

4. Product according to any one of the claims 1 to 3, characterized in that the second group is chosen from among cinnamate, maleate, fumarate, styrene, acrylate, methacrylate and maleimide groups.

5. Product according to any one of the preceding claims, characterized in that the second group is of the methacrylate or maleate type.

6. Composite material having carbon fibres embedded in a resin hardened by radiation according to a radical mechanism, characterized in that it comprises a fibre lubricating product according to any one of the claims 1 to 5 ensuring the adhesion of the resin to the fibres.

7. Process for producing a composite material having carbon fibres (2) embedded in a resin (4) and comprising:
a) dissolving the lubricating product according to any one of the claims 1 to 5 in an organic solvent,
b) depositing (20) on the fibres the solution obtained in a),
c) heating (24) the fibres obtained in b) in order to evaporate the solvent and solely trigger the chemical reaction between the first group and the reaction sites of the fibres,
d) impregnating (28) the fibres obtained in c) with a resin hardenable by radiation according to a radical mechanism and
e) subjecting (32) the resin-impregnated fibres to the said radiation in order to copolymerize the lubricating product with the resin via the second group and hardening said resin.

8. Process according to claim 7, characterized in that into the solution obtained in a) is introduced a catalyst or a catalyst mixture in order to aid the chemical reaction of stage c).

9. Process according to claim 7 or 8, characterized in that the hardenable resin has an ethylene unsaturation.

10. Process according to any one of the claims 7 to 9, characterized in that the radiation is a X or beta radiation.
